# EUROPÄISCHE PATENTSCHRIFT

(11) **EP 1 077 242 B1**
(45) Veröffentlichungstag und Bekanntmachung des Hinweises auf die Patenterteilung: **31.03.2004**
(21) Anmeldenummer: 00116200.7
(22) Anmeldetag: 03.08.2000
(51) Int. Cl.: C09J 7/00

(54) **Klebfolienstreifen und seine Verwendung**
Adhesive strip and use thereof
Ruban adhésif et son utilisation

(30) Priorität: 14.08.1999 DE 19938693
(43) Veröffentlichungstag der Anmeldung: 21.02.2001
(73) Patentinhaber: Tesa AG, 20253 Hamburg (DE)
(72) Erfinder: Lühmann, Bernd, Dr., 22844 Norderstedt (DE); Junghans, Andreas, 22457 Hamburg (DE); Frank, Achim, 20259 Hamburg (DE)

(56) Entgegenhaltungen:
- EP-A- 0 987 309
- DE-A- 4 428 587

## Beschreibung

Die Erfindung betrifft einen Klebfolienstreifen und seine Verwendung, insbesondere ist Gegenstand der Erfindung in stripfähiger, hoch schälfester, haftklebriger Klebfolienstreifen mit einem ersten Klebfolienstreifenbereich hoher Querschnittsfläche, bevorzugt realisiert durch eine hohe Klebestreifenbreite und einem an diesen ersten Klebfolienstreifenbereich anschließenden zweiten Klebfolienstreifenbereich mit starker, spontaner Verjüngung der haftklebrigen Klebfolienquerschnittsfläche, verbunden mit einem oder mehreren spitz zulaufenden Klebfolienstreifenenden, welcher nur eine sehr geringe Übertragung der beim Ablöseprozeß im Klebfolienstreifen elastisch gespeicherten Energie auf einen verklebten Gegenstand aufweist und damit zum Ende des Ablöseprozesses bei beidseitig haftklebrigen Klebfolienstreifen kein signifikantes Katapultieren des Verbundes von einem der verklebten Gegenstände und dem Klebfolienstreifen bewirkt, auch dann nicht, wenn einer der beiden miteinander verklebten Gegenstände während des Ablöseprozesses nicht fixiert wird. Gleichzeitig weist der erfindungsgemäße Klebfolienstreifen zum Ende des Ablöseprozesses einen deutlich verringerten Abfall der in ihm elastisch gespeicherten Energie auf.

### Einleitung / Stand der Technik

Die Erfindung betrifft einen beidseitig haftklebrigen, hoch schälfesten Klebfolienstreifen für eine rückstands- und zerstörungsfrei wiederablösbare Verklebung, der sich durch im wesentlichen in der Verklebungsebene dehnendes Verstrecken derart aus einer Klebfuge herauslösen läßt, daß das Entkleben beider Verklebungspartner weitestgehend simultan verläuft und zum Ende des Ablöseprozesses kein signifikantes Katapultieren des Verbundes von einem der verklebten Gegenstände mit dem Klebestreifen auftritt. Gleichzeitig weist erfindungsgemäßer Klebfolienstreifen nur einen sehr geringen Abfall der beim Ablöseprozeß in ihm gespeicherten elastischen Energie auf.

Die Erfindung betrifft desweiteren einen einseitig haftklebrigen, hoch schälfesten Klebfolienstreifen für eine rückstands- und zerstörungsfrei wiederablösbare Verklebung, der sich durch im wesentlichen in der Verklebungsebene dehnendes Verstrecken derart ablösen läßt, daß zum Ende des Ablöseprozesses nur ein sehr geringer Abfall der in ihm elastisch gespeicherten Energie auftritt, wodurch nur ein sehr geringer Übertrag der beim Ablöseprozeß im Klebestreifen elastisch gespeicherten Energie auf den verklebten Gegenstand stattfindet.

Elastisch oder plastisch hochdehnbare (stripfähige) Selbstklebebänder, welche sich durch im wesentlichen in der Verklebungsebene dehnendes Verstrecken rückstands- und zerstörungsfrei wiederablösen lassen, sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729 und DE 197 08 366 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozeß eingeleitet wird. Besondere Anwendungen entsprechender Selbstklebebänder finden sich u. a. in DE 42 33 872, DE 195 11 288, US 5,507,464, US 5,672,402 und WO 94/21157. Spezielle Ausführungsformen sind z. B. in DE 44 28 587, DE 44 31 914, WO 97/07172, DE 196 27 400, WO 98/03601 und DE 196 49 636 beschrieben.

Ein sehr vorteilhaftes Qualitätskriterium vorgenannter stripfähiger Klebfolienstreifen ist ihr Vermögen unter Verstreckung, mithin beim Ablöseprozeß, eine verringerte Haftklebrigkeit auszubilden, wodurch beim Herauslösen entsprechender beidseitig haftklebriger Klebfolienstreifen aus der Klebfuge eine geringe Reibung der Klebestreifen an den Kanten der Verklebungspartner erhalten wird und damit eine geringe mechanische Belastung der Klebestreifen in diesen potentiellen Kontaktbereichen. Wesentlich speziell für die wiederablösbare Verklebung starrer Fügepartner ist eine Reduzierung der Klebfolienstreifendicke beim Ablösen, Grundvoraussetzung dafür, daß beidseitig haftklebrige Klebebänder aus einer Klebfuge herausgezogen werden können.

Die Realisierung von stripfähigen Selbstklebebändern, welche einerseits durch eine große Klebestreifenbreite eine hohe Schälfestigkeit aufweisen, andererseits auch von sehr empfindlichen Untergründen in allen Fällen **sicher rückstands-, zerstörungs- und reißerfrei wiederabgelöst** werden können, ist ein komplexes Unterfangen und bedarf weiterer Voraussetzungen. **DE 44 31 914 und DE 196 49 636** nehmen sich bzgl. des rückstands-, zerstörungs- und reißerfreien Wiederablösens insbesondere der Problematik von Reißem im Anfasserbereich bzw. im direkt an den Anfasserbereich angrenzenden Klebestreifenbereich an. **DE 44 28 587** beschreibt einen Klebfolienstreifen für eine wiederlösbare Verklebung, der sich durch Ziehen in Richtung der Verklebungsebene aus einer Klebfuge herauslösen läßt, dadurch gekennzeichnet, daß die Verklebungsfläche zum Ende des Klebfolienstreifens (Ende, welches in der Klebfuge verschwindet) hin abnimmt (siehe Anspruch 1). DE 44 28 587 beschreibt spitze, gezackte, konvex gekrümmte sowie gewellte Klebfolienstreifenenden. Wesentlich ist in jedem Fall eine Reduzierung der Verklebungsfläche zum Ende des Klebestreifens (Spalte 1, Zeilen 63 und 64). Entsprechend geformte Klebfolienstreifen weisen im Vergleich zu Klebfolienstreifen deren Verklebungsfläche zum Klebfolienstreifenende nicht abnimmt, eine **signifikant verringerte Reißemeigung im Endbereich der Klebestreifen** auf. **Gleichzei** tig reduzieren sich Substratschädigungen deutlich, so daß auch sehr empfindliche Substrate mit entsprechenden Klebfolienstreifen reversibel verklebt werden können.

Ebenfalls problematisch kann die Übertragung der während des Stripprozesses im abzulösenden Klebestreifen elastisch gespeicherten Energie auf einen Verklebungspartner sein. Hierbei kann es bei doppelseitig haftklebrigen Klebfolienstreifen zum Katapultieren des Verbundes aus abzulösendem Klebestreifen und einem der verklebten Gegenstände kommen, welches nicht unerheblichen Schaden hervorrufen kann. Auch kann die **spontane elastische Entspannung speziell hochelastischer stripfähiger Selbstklebebänder am Ende des Stripprozesses** (= Abfall der beim Ablöseprozeß im Klebestreifen elastisch gespeicherten Energie am Ende des Ablöseprozesses) dazu führen, daß das Klebeband gegen die Finger schnellt, was recht schmerzhafte Folgen hervorzurufen vermag.

**WO 97/07172** nimmt sich dieser speziellen Problematiken des **Katapultierens (catapulting)** von mit beidseitig haftklebrigen, stripfähigen Selbstklebebändern verklebten Gegenständen sowie des spontanen Herausschnellens vorgenannter Selbstklebebänder zum Ende des Ablöseprozesses aus der Klebfuge (snap-back) an. Ein Katapultieren verklebter Gegenstände kann dann auftreten, wenn sich der abzulösende Klebestreifen zum Ende des Ablöseprozesses lediglich von einem der Verklebungspartner, z. B. der Wand, gelöst hat und der zweite Verklebungspartner nicht ausreichend fixiert ist. Die bei der Verstreckung des Selbstklebestreifens in diesem elastisch gespeicherte Energie bewirkt nachfolgend das Katapultieren des Verbundes aus Klebestreifen und dem nicht fixierten noch mit dem Klebfolienstreifen verklebten Gegenstand in Ablöserichtung. Als Lösung beschreibt WO 97/07172 einen stripfähigen Selbstklebestreifen, welcher auf einer Klebefläche am Ende des Klebestreifens einen Bereich ohne oder doch signifikant verringerter Haftklebrigkeit aufweist (differentielles Klebestreifenende). Ist entsprechende Selbstklebestreifenfläche zum verklebten Gegenstand gerichtet, so erfolgt beim Ablösen des Klebestreifens zunächst eine vollständige Trennung des Klebestreifens vom verklebten Gegenstand, so daß dieser vom Verklebungsuntergrund abgelöst ist und von dort entfernt werden kann, bei weiterer Verstreckung des Selbstklebebandstreifens löst sich selbiger sodann vom zweiten Haftgrund, z. B. der Wand, ab. Vorgenannte Klebestreifen ermöglichen somit ein gezielt steuerbares sequentielles Ablösen einer Klebbindung. Durch den so gesteuerten sequentiellen Ablöseprozeß ist ebenfalls das Herausschnellen des Klebfolienstreifens aus der Klebfuge (snap-back) durch den Wegfall eines Verklebungspartners (er ist ja schon abgelöst) verringert.

Ohne haftklebefreien oder signifikant haftklebereduzierten Endbereich ist die Ablösesequenz zweier verklebter Gegenstände üblicherweise nicht auf einfache Art gezielt steuerbar. Vielmehr beobachtet man z. B. bei einem mit einem nicht entsprechend WO 97/07127 ausgestalteten stripfähigen Selbstklebeband an einer Wand befestigten Poster, daß das Poster, wenn es beim Ablöseprozeß nicht fixiert wird, zum Ende des Ablöseprozesses mit dem Klebestreifen katapultartig in Ablöserichtung beschleunigt wird. Hier findet also zunächst ein vollständiges Ablösen des Selbstklebebandes von der Wand statt, wobei im Moment des vollständigen Ablösens des Klebestreifens von der Wand sich selbiger noch nicht vollständig vom Poster getrennt hat. Die beim Verstreckungsprozeß des Selbstklebestreifens in diesem elastisch gespeicherte Energie bewirkt nachfolgend das Katapultieren des verklebten Gegenstandes, hier des Posters, in Ablöserichtung. Insbesondere empfindliche Materialien, wie z. B. Poster, welche sehr dünne, wenig einreißfeste Papiere nutzen, können so beim Ablöseprozeß leicht geschädigt werden. Feste Materialien können durch die katapultartige Beschleunigung zum Ende des Ablöseprozesses und nachfolgendes Aufprallen auf einem anderen Gegenstand beschädigt werden oder denselben schädigen. Insbesondere kann das Aufprallen katapultartig beschleunigter Verklebungsgegenstände auf die Finger sehr schmerzhaft sein und auch Verletzungen hervorrufen. Werden empfindliche, flexible Materialien, wie z. B. Poster zwar fest an den Verklebungsuntergrund gedrückt, ist dabei jedoch der Bereich zwischen abzulösendem Klebestreifen und der Stelle an der das Poster an den Verklebungsuntergrund angedrückt wird nicht straff fixiert (bildet das Posterpapier also z. B. eine wellenartige Ausbuchtung zwischen dem Bereich in dem es mit dem Klebfolienstreifen auf dem Untergrund fixiert ist und der Stelle, an der es z. B. mit der Hand an den Untergrund angedrückt wird), so kommt es bei wenig festen Posterpapieren sehr häufig zum Zerreißen am Ende-des Ablöseprozesses, da das Poster mit dem Klebestreifen zum Ende des Ablöseprozesses zunächst in Ablöserichtung beschleunigt werden kann, nach kurzer Beschleunigungsstrecke jedoch spontan gestoppt wird, mithin eine sehr hohe negative Beschleunigung erfährt, welche zum Zerreißen des Posterpapieres führen kann. Das Katapultieren von mit stripfähigen Selbstklebestreifen befestigten Gegenständen kann durch eine straffe Fixierung desselben beim Ablöseprozeß zwar sicher vermieden werden, jedoch zeigt die Praxis, daß insbesondere unerfahrene Anwender, aber auch Kinder eine entsprechende Fixierung nicht immer vornehmen, häufig mit entsprechendem Schaden für die verkiebten Gegenstände oder den Anwender selbst.

Obwohl die in der WO 97/07172 beschriebenen Maßnahmen für zahlreiche Produktaufbauten beidseitig haftklebriger, stripfähiger Selbstklebebänder einen effektiven Schutz gegen die spezielle Problematik des Katapultierens verklebter Gegenstände liefert, so bleiben doch zahlreiche Probleme ungelöst bzw. ergeben sich durch den benötigten speziellen Produktaufbau auch neue Probleme:
1. Es bedarf eines nicht unwesentlichen Aufwandes Klebestreifen derart auszurüsten, daß sie über ein differentielles Klebestreifenende verfügen.
2. Die Hauptproblematik aber ist, daß der Nutzer entsprechender Selbstklebestreifen dieselben mit der korrekten Zuordnung der Klebeflächen zu den Verklebungspartnern applizieren muß. Mithin muß für die richtige Nutzung der Selbstklebestreifen nicht nur die Orientierung der Anfassers korrekt vorgenommen werden, vielmehr muß zusätzlich berücksichtigt werden, daß die richtige Selbstklebestreifenfläche, eben diejenige mit dem haftklebstoffreien bzw. vermindert haftklebrigen Endbereich, zum verklebten Gegenstand gerichtet ist. Insbesondere bei der Verklebung von zwei oder mehreren ähnlichen Gegenständen miteinander kann der Vorzug des sequentiellen Ablösens in der Praxis jedoch selten ausgenutzt werden, da dem Anwender kaum in Erinnerung sein dürfte, welche Seite des Selbstklebestreifens sich auf welchem Verklebungspartner befindet.
3. Wird der zu entfernende Gegenstand beim Ablösen des stripfähigen Selbstklebestreifens nicht fixiert, so ergeben sich weitere Probleme. Im Falle der nicht korrekten Orientierung des mit einem differentiellen Klebestreifenende versehenen Klebestreifens tritt in diesem Fall das Katapultieren eines z. B. an einer Wand fixierten Gegenstandes sogar verstärkt in Erscheinung: im Moment des Ablösens des Klebestreifens von der Wand wird in jedem Fall die gesamte Stripkraft auf das fixierte Objekt übertragen, was zu einem sehr starken Katapulteffekt führen kann.

**DE 44 28 587** beschreibt, wie zuvor aufgeführt, Klebfolienstreifen für eine wiederablösbare Verklebung, welche sich durch Ziehen in Richtung der Verklebungsebene aus einer Klebfuge herauslösen lassen. Wesentlich ist in jedem Fall eine Reduzierung der Verklebungsfläche zum Ende des Klebestreifens (Spalte 1, Zeilen 63 und 64). DE 44 28 587 beschreibt spitze, gezackte, konvex gekrümmte sowie gewellte Klebfolienstreifenenden. Die Probleme des Katapultierens verklebter Gegenstände sowie des spontanen Herausschnellens stripfähiger Klebestreifen zum Ende des Ablöseprozesses werden in der DE 44 28 587 nicht angesprochen. Sie werden durch die vorgeschlagenen Maßnahmen ebenfalls nicht sicher ausgeschlossen. Gleichfalls gibt die DE 44 28 587 keine Hinweise darauf, wie zum Ende des Ablöseprozesses ein sehr geringer Abfall der beim dehnenden Ablösen in den Klebestreifen gespeicherten elastischen Energie realisiert werden kann.

### Zielsetzung

Ziel vorliegender Erfindung war es einen doppelseitig haftklebrigen Selbstklebestreifen vorzulegen, welcher
- eine hohe Schälfestigkeit aufweist,
- durch ein weitgehend simultanes Ablösen von beiden Verklebungspartnern kein signifikantes Katapultieren verklebter Gegenstände zum Ende des Ablöseprozesses aufweist, auch dann nicht, wenn einer der verklebten Gegenstände beim Ablöseprozeß nicht fixiert wird,
- durch seinen Produktaufbau keine besondere Zuordnung der Klebestreifenseiten zu den Verklebungspartnern benötigt und damit
- nicht der separaten asymmetrischen Ausrüstung mittels eines einseitig haftklebstoffreien Endbereiches bedarf,
- zum Ende des Ablöseprozesses nur einen sehr geringen Abfall der beim dehnenden Ablösen elastisch im Klebestreifen gespeicherten Energie zeigt.

Ziel vorliegender Erfindung war es desweiteren einen einseitig haftklebrigen Selbstklebestreifen vorzulegen, welcher durch seine spezielle Klebestreifenform
- eine hohe Schälfestigkeit aufweist,
- zum Ende des Ablöseprozesses nur eine sehr geringe Übertragung der beim Ablösen im Klebestreifen gespeicherten Energie auf den verklebten Gegenstand zeigt,
- zum Ende des Ablöseprozesses nur einen sehr geringen Abfall der beim dehnenden Ablösen elastisch im Klebestreifen gespeicherten Energie bewirkt.

### Zielerreichung

Erreicht wird dies überraschenderweise durch einen Selbstklebestreifen, welcher in der praktischen Anwendung unter nahezu allen Anwendungsbedingungen eine hohe Ablösegeschwindigkeit zum Ende des Ablöseprozesses aufweist. Ein zügiges Ablösen durch den Anwender wird natürlicherweise durch die Realisierung niedriger Stripkräfte begünstigt, was z. B. durch niedrige Klebestreifendicken oder geringe Klebestreifenbreiten bzw. Breiten der Haftklebebereiche möglich ist, Maßnahmen, welche sich jedoch bzgl. der für ein sicheres Ablösen benötigten Reißfestigkeit (im Falle sehr dünner Klebestreifen) bzw. in einer begrenzten Verklebungsfläche (im Falle sehr schmaler Klebestreifen bzw. sehr schmaler Haftklebebereiche) unvorteilhaft bemerkbar machen. Es zeigt sich nun, daß durch Klebestreifenformen, welche einen ersten, z. B. an den optional vorhandenen Anfasser der Klebestreifen angrenzenden, Haftklebebereich von vergleichsweise hoher Querschnittsfläche (realisiert z. B. durch eine großer Breite und Dicke des Klebestreifens) an den sich ein zweiter Klebestreifenbereich stark abnehmender bzw. sich verjüngender Querschnittsfläche (realisiert z. B. durch einen sich in der Breite stark verjüngenden Haftklebebereich) anschließt, welcher zum Ende des Klebestreifens in einen oder mehrere spitz auslaufende Klebestreifenenden einmündet, sehr hohe Schälfestigkeiten erreicht werden sowie ebenfalls sehr hohe Ablösegeschwindigkeiten im Endbereich der Klebestreifen realisiert werden. Wesentlich für hohe Schälfestigkeiten ist die Klebestreifenbreite im o. g. ersten Klebestreifenbereich hoher Querschnittsfläche, wesentlich für hohe Ablösegeschwindigkeiten zum Ende des Ablöseprozesses ist eine vergleichsweise hohe Ablösekraft (Stripkraft) in dem ersten vorgenannten Haftklebestreifenbereich (der Anwender muß kräftig ziehen, um den Klebestreifen aus der Klebfuge herauszulösen), welche dann in dem zweiten vorgenannten Klebestreifenbereich innerhalb einer kurzen Wegstrecke signifikant abfällt, so daß der Ablöseprozeß stark beschleunigt fortgeführt wird. Wesentlich für einen geringen Abfall der während des Ablöseprozesses im Klebestreifen elastisch gespeicherten Energie ist das in einer oder mehreren Spitzen zulaufende Klebestreifenende.

Bevorzugte Klebestreifenformen weisen einen ersten Bereich hoher Querschnittsfläche der haftklebrigen Klebestreifenbereiche auf, welcher bevorzugt über eine hohe Klebestreifenbreite realisiert wird. Bevorzugte Klebestreifenbreiten liegen in diesem ersten Klebestreifenbereich zwischen ca. 8 mm und ca. 30 mm, besonders bevorzugt zwischen ca. 10 mm und ca. 25 mm. Bevorzugte Stripkräfte liegen im ersten Klebestreifenbereich im Mittel bei größer ca. 5 N, besonders bevorzugt bei größer 10 N (Stripkraft gemessen für weißes Schreibmaschinenpapier {Flächengewicht: 80 g/m²} verklebt auf gestrichener Rauhfasertapete; siehe unter Prüfmethoden). An den ersten Klebestreifenbereich hoher Querschnittsfläche, bevorzugt realisiert durch eine hohe Klebestreifenbreite, schließt sich ein zweiter Klebestreifenbereich an, in welchem sich die Querschnittsfläche der haftklebrigen Klebestreifenbereiche innerhalb einer kurzen Wegstrecke signifikant verringert. Bevorzugt wird eine Reduzierung der Klebestreifenquerschnittsfläche um mehr als ca. 60 % besonders bevorzugt von mehr als 75 % innerhalb einer Klebestreifenlänge von weniger als ca. 50 % der Klebestreifenbreite am Ende des ersten Klebestreifenbereiches, bevorzugt von weniger als 35 % der Klebestreifenbreite am Ende des ersten Klebestreifenbereiches, erreicht. Klebestreifenenden sind spitz auslaufend ausgeformt. Möglich sind eine oder mehrere spitz auslaufende Klebestreifenenden. Winkel zwischen spitz zulaufenden Klebestreifenkanten betragen in den Klebestreifenspitzen weniger als 35°, bevorzugt weniger als 20°, besonders bevorzugt weniger als 15°. Krümmungsradien der Klebestreifenenden betragen weniger als 0.5 mm, bevorzugt weniger als 0.3 mm. Die Gesamtlänge der Klebestreifen ist größer ca. 20 mm, bevorzugte Längen betragen ca. 25 mm bis 100 mm, jedoch sind prinzipiell auch größere Längen erfindungsgemäß einsetzbar, besonders bevorzugt betragen sie 30 mm bis 65 mm.

Die Ablösegeschwindigkeit stripfähiger Selbstklebebänder kann durch die Separationsgeschwindigkeit des sich bewegenden Anfassers v_{A} oder durch die Geschwindigkeit der sich vom Untergrund ablösenden Klebmasse v_{PSA} beschrieben werden. Im stationären Fall (konstante Abzugsgeschwindigkeit, konstante Klebestreifenbreite und Klebestreifendicke) sind beide Größen zueinander proportional. Die Proportionalitätskonstante ist in diesem Fall durch die aktuelle Dehnung des Klebestreifens festgelegt. Die beobachtete Reduktion des spontanen Abfalls der elastisch im Klebestreifen gespeicherten Energie (welche das Katapultieren bewirkt) tritt wahrscheinlich auch dadurch auf, daß in ihrer Querschnittsfläche bzw. in ihrer Breite sich verjüngende Klebestreifen, bedingt durch die sich in gleicher Weise stetig reduzierende Ablösekraft im Bereich der Klebestreifenverjüngung, ein signifikant geringeres Verhältnis von v_{A} / v_{PSA} aufweisen, sich also bei gleicher Separationsgeschwindigkeit des Anfassers eine höhere Geschwindigkeit der sich vom Untergrund ablösenden Klebemasse einstellt.

Hohe Ablösegeschwindigkeiten zum Ende des Ablöseprozesses lassen sich außer durch Integration eines sich in der Breite reduzierenden Klebestreifenbereiches durch eine entsprechende Reduzierung der Klebestreifendicke oder durch eine Reduzierung der Verklebungsfestigkeit im Verlauf des Ablöseprozesses (z. B. durch beidseitige fortschreitende Inertisierung der Haftklebemasse entsprechend DE 44 28 587) oder durch eine Kombination der vorgenannten Möglichkeiten realisieren.

Als weiteren Vorteil verfügen erfindungsgemäße Selbstklebebänder im Endbereich der Klebestreifen über ein hervorragendes reißerfreies und rückstandsfreies Wiederablösevermögen, dies auch von sehr empfindlichen Untergründen, wie z. B. empfindlichen Papiertapeten oder von sehr haftfreudigen Untergründen, wie z. B. Metall, Glas oder polaren Kunststoffoberflächen.

Im folgenden soll die Erfindung anhand von beispielhaft dargestellten Zeichnungen erläutert werden, ohne sie jedoch unnötig einschränken zu wollen. Es zeigen in schematischer Draufsicht:
- Figur I:: einen bekannten Klebfolienstreifen,
- Figur II: - XIIIb:: erfindungsgemäße Klebfolienstreifen

Im einzelnen zeigen diese Figuren einen Anfasser 1 und einen sich daran anschließenden klebenden Bereich 2, der gemäß Figuren II bis XIIIb in wiederum drei Bereiche 4, 5, 6 unterteilt ist; einen ersten klebenden Bereich 4, einen zweiten klebenden Bereich 5 und einen dritten klebenden Bereich 6 mit Spitze(n) 7 am Ende 3. Der besseren Übersichtlichkeit wegen ist nicht in allen Figuren jedes Bezugszeichen eingefügt. Der dritte klebende Bereich 6 läuft in einer oder mehren Spitzen 7 aus. Der erste klebende Bereich 4 geht in den zweiten klebenden Bereich 5 über und ist an seinem Ende mit 8 bezeichnet.

### Detailbeschreibung

### Produktaufbau

Erfindungsgemäß geeignete Klebfolienstreifen können einen einschichtigen Produktaufbau entsprechend DE 33 31 016 C2 und DE 42 22 849 aufweisen. Erfindungsgemäß einsetzbar sind ebenfalls Klebfolienstreifen bestehend aus mehreren Klebstoffschichten z. B. entsprechend DE 197 08 366 einschließlich solcher, bei denen eine oder mehrere der Klebstoffschichten geschäumt sind. Desweiteren sind Klebfolienstreifen entsprechend DE 196 49 727, DE 196 49 728, DE 196 49 729 und WO 95/06691, welche schaumstoffhaltige Zwischenträger aufweisen, erfindungsgemäß einsetzbar. Erfindungsgemäß einsetzbar sind ebenfalls Klebstoff-Folien entsprechend US 4,024,312.

### Formgestaltung - Kombination eines Bereiches hoher Stripkraft mit einem Bereich niedriger Stripkraft

Bevorzugte Klebestreifenformen weisen anschließend an einen optional vorhandenen nicht haftklebrigen Anfasserbereich ((1) in Fig. IIIa) einen ersten Bereich hcher Querschnittsfläche der haftklebrigen Klebestreifenbereiche auf, welcher bevorzugt durch eine hohe Klebestreifenbreite realisiert ist ((2) in Fig. IIIa). In einer besonderen Ausführungsform kann der erste Klebestreifenbereich im Vergleich zum zweiten sich stark verjüngenden Klebestreifenbereich gleichzeitig eine höhere mittlere Gesamtdicke aufweisen. In einer weiteren besonderen Ausführungsform kann sich der erste Klebestreifenbereich parallel zur Ablöserichtung leicht in Breite und/oder Dicke verjüngen (siehe z. B. Fig. XI). Bevorzugte Klebestreifenbreiten liegen im ersten Klebestreifenbereich zwischen ca. 8 mm und ca. 30 mm, besonders bevorzugt zwischen ca. 10 mm und ca. 25 mm. Klebestreifendicken betragen im Mittel 400 µm bis 2000 µm, bevorzugt 500 µm bis 1250 µm. Bevorzugte Stripkräfte liegen im ersten Klebestreifenbereich im Mittel bei größer ca. 5 N, bevorzugt bei größer 10 N (Stripkraft gemessen für weißes Schreibmaschinenpapier {Flächengewicht: 80 g/m²} verklebt auf gestrichener Rauhfasertapete; siehe auch Kapitel Prüfmethoden). An den ersten Klebestreifenbereich hoher Querschnittsfläche, bevorzugt realisiert durch eine hohe Klebestreifenbreite, schließt sich ein zweiter Klebestreifenbereich an, in welchem sich die Querschnittsfläche der Klebestreifen innerhalb einer kurzen Wegstrecke stark verringert ((3) in Fig. IIIa). Die Reduzierung der Querschnittsfläche der Klebestreifen wird insbesondere durch eine Reduzierung der Klebestreifenbreite erreicht. Bevorzugt wird eine Reduzierung der Klebestreifenbreite um mehr als 60 %, besonders bevorzugt von mehr als 75% innerhalb einer Klebestreifenlänge von weniger als ca. 50 % der Klebestreifenbreite am Ende des ersten Klebestreifenbereiches, bevorzugt von weniger als 35 % der Klebestreifenbreite am Ende des ersten Klebestreifenbereiches, realisiert. Im Bereich der starken Verringerung der Klebestreifenquerschnittsfläche können die sich verjüngenden Klebestreifenkanten sowohl von linearer Form (siehe z. B. Fig. V, VI, VII) als auch von nicht linearer, z. B. geschwungener, Form sein (siehe z. B. Fig. II bis IV und VIII bis XI). Klebestreifenenden sind spitz auslaufend ausgeformt ((4) in Fig. IIIa). Möglich sind eine (siehe z. B. Fig. II bis IV und XI) oder mehrere (siehe z. B. Figuren VIII und IX) spitz auslaufende Klebestreifenenden. Krümmungsradien der Klebestreifenenden betragen weniger als 0.5 mm, bevorzugt weniger als 0.3 mm. Winkel zwischen spitz zulaufenden Klebestreifenkanten betragen in den Klebestreifenspitzen weniger als 35°, bevorzugt weniger als 20°, besonders bevorzugt weniger als 15°. Die Gesamtlänge der Klebestreife ist größer ca. 20 mm, bevorzugte Längen betragen ca. 25 mm bis 100 mm, besonders bevorzugt 30 mm bis 65 mm.

### Klebestreifen mit partieller Inertisierung der Haftklebemasseoberfläche

Optional können erfindungsgemäße Klebestreifen entsprechend DE 44 28 587 durch beidseitige partielle Inertisierung der Haftklebebereiche modifiziert sein (siehe Figur in Bspl. IV-02). Vorteile entsprechender Ausführungsformen sind die Möglichkeit der Steuerung der Stripkräfte über die Klebestreifenlänge, die Möglichkeit der Nutzung höhere Krümmungsradien am Klebestreifenende sowie eine zusätzliche Reduzierung von Katapultierneigung und Katapultierkräften. Bevorzugt ist eine partielle Inertisierung, welche auf sich gegenüberliegenden Klebestreifenoberflächen in Identischer Weise, mithin deckungsgleich ausgeführt ist.

### Anfasserbereiche

Erfindungsgemäße Selbstklebebänder enthalten bevorzugt an dem Klebestreifenende, von welchem aus der Ablöseprozeß gestartet wird, einen nicht haftklebrigen Anfasserbereich (Fig. III, 1). Der nicht haftklebrige Anfasserbereich kann, analog DE 42 22 849 oder DE 43 39 604 oder DE 196 49 636 durch Aufkaschieren dünner Kunststoff-Folien, dünner Papiere oder mittels Bedrucken möglich. Zuletzt genannte Möglichkeit ist insbesondere dann vorteilhaft einsetzbar, wenn gleichzeitig der Haftklebebereich durch in Teilen der Oberfläche durch partieller Inertisierung eingestellt werden soll. Wird ein reißfester, schaumstoffhaltiger Zwischenträger z. B. entsprechend WO 95/06691 verwendet, so kann der nicht haftklebrige Anfasserbereich durch den in diesem Bereich nicht mit Haftklebemasse beschichteten Zwischenträger gebildet werden.

### Fertigung

Klebestreifen lassen sich durch Stanzen aus Rollenware erhalten. Bevorzugt wird ein Stanzprozeß entsprechend DE 196 41 094 genutzt, welcher eine weitestgehend verlustfreie Herstellung der Stanzlinge erlaubt. Hierbei besteht die Möglichkeit, daß einzelne Klebestreifen als auch Gruppen von Klebestreifen, z. B. Paare, entsprechend DE 196 41 094 weitestgehend verlustfrei gestanzt werden können (siehe z. B. Fig. XII und XIII).

### Prüfmethoden

### Bestimmung der Katapultierkraft bei horizontaler Verklebung der Klebestreifen

Klebfolienstreifen der gewünschten Form und Größe werden auf einen fest fixierten horizontal angeordneten Haftgrund (z. B. Stahl, mit lackierter Rauhfasertapete beschichtete Spanplatte, Kachel, Resopal etc.) verklebt. Hierzu werden die Klebfolienmuster mittels einer 2 kg schweren Stahlrolle auf den entsprechenden Untergrund durch zweimaliges Überrollen angedrückt. Ein Papierstreifen (weißes Schreibmaschinenpapier; Flächengewicht = 80 g/m²) der Abmessungen 30 mm x 80 mm (Breite x Länge) wird derart auf den Klebfolienstreifen verklebt, daß auf dessen einer schmalen Seite ein mindestens 10 mm langer Abschnitt des Klebfolienstreifens als anfaßbares Ende aus der erzeugten Klebfuge heraussteht. Am gegenüberliegenden schmalen Ende des Papierstreifens wird eine Klemme befestigt. Der Papierstreifen wird anschließend mittels einer 2 kg schweren Stahlrolle durch zweimaliges Überrollen angedrückt. An der Klemme wird nun eine Federwaage befestigt, die ihrerseits fest fixiert wird.

Die Katapultierkraft beim Ablösen des entsprechenden Klebfolienstreifens wird bestimmt, indem der Klebfolienstreifen mit der gewählten Geschwindigkeit (z. B. 2,5 m/min, 5 m/min, 10 m/min, 20 m/min) bei einem Winkel von maximal 3 ° zum Untergrund aus der Klebfuge herausgezogen wird. Bei Vorliegen eines merklichen sequentiellen Ablösen des Klebfolienstreifens am Ende des Ablösevorganges resultiert ein plötzliches Katapultieren des Papierstreifens in Ablöserichtung. Die dabei auftretende Kraft wird mittels der Federwaage bestimmt.

### Ermittlung der Katapultierneigung bei vertikalem Ablösen der Klebestreifen

Klebfolienstreifen der gewünschten Form und Größe werden auf einen fest fixierten vertikal angeordneten Haftgrund (z. B. Stahl, mit lackierter Rauhfasertapete beschichtete Spanplatte, Kachel, Resopal etc.) mittels Daumenandruck verklebt. Zur Bestimmung der Katapultierneigung wird Papier (weißes Schreibmaschinenpapier; Flächengewicht: 80 g/m²; Größe: DIN A4) mittels Daumenandruck auf das Klebfolienmuster verklebt, so daß ein anfaßbarer Abschnitt des Klebfolienstreifens von mindestens 10 mm Länge mittig über eine schmale Seite des A4-Papieres vertikal nach oben aus der Klebfuge heraussteht. Der Klebfolienstreifen wird nun durch Ziehen und Verstrecken in einem Winkel von maximal 3° zur Verklebungsfläche vertikal nach oben (in Richtung des Anfassers) mit einer definierten Ablösegeschwindigkeit (z. B. 2,5 m/min, 5 m/min, 10 m/min, 20 m/min) abgelöst. Kommt es am Ende des Ablösevorganges zu einem Katapultieren des Verbundes aus Klebfolienstreifen und dem verklebten Papier, so wird bestimmt, auf welche Höhe der Verbund beschleunigt wird. Alternativ kann die Katapultierneigung qualitativ, z. B. in stark = 3, merklich = 2, gering = 1, sehr gering oder nicht nachweisbar = 0 eingeteilt werden. Eine sehr geringe oder nicht wahrnehmbar Katapultierneigung entsprechen Katapultierhöhen von ≤ ca. 10 mm, einer geringen Katapultierneigung solchen zwischen ca. 10 mm und 50 mm, einer merklichen Katapultierneigung solche von > ca. 50 mm. Wird die Katapultierneigung als stark eingestuft besteht eine hohe Gefahr, daß bei Verwendung von dünnen Posterpapieren (Dicken < ca. 60µm), das Poster zum Ende des Ablöseprozesses im Endbereich der Verklebung einreißt. Bei einer Klassifizierung der Katapultiemeigung als "merklich" werden bei Verwendung entsprechend dünner Posterpapiere (Dicken < ca. 60µm) in einigen Fällen leichte Faserausrisse beobachtet.

### Messung der Stripkraft

Ein beidseitig mit Trennpapier abgedeckter Klebfolienstreifen der gewünschten Form und Größe wird einseitig vom Trennpapier befreit und nachfolgend für 10 Sekunden bei einem Andruck von 10 N / cm² auf mit weißer Dispersionsfarbe lackierter Rauhfasertapete (Tapete: Erfurt Körnung 52; Farbe: Herbol Zenit LG; Tapete fixiert auf Spanplatte) verklebt. Um eine möglichst vollflächige Verklebung zu erreichen, wird der Andruck auf den Klebestreifen über eine 10 mm dicke Schaumstoffzwischenlage (PU-Schaumstoff der Dichte 100 kg/m³) vermittelt. In einem zweiten Verarbeitungsschritt wird zunächst das zweite Trennpapier vom Klebestreifen abgelöst, sodann mit weißem Schreibmaschinenpapier vom Flächengewicht 80 g/m² (Abmessungen: 30 mm x 80 mm (Breite x Länge) derart eingedeckt, daß der Klebestreifen mit seinem Anfasser die schmalen Seite des Papierstreifens um ca. 10 mm überragt. Der Papierstreifen wird anschließend mittels einer 2 kg schweren Stahlrolle durch zweimaliges Überrollen angedrückt. Gemessen wir die Stripkraft bei einer Separationsgeschwindigkeit von 1800 mm/min.

### Prüfmustererstellung

50 Teile eines 2:1-Gemisches von Vector 4211 (Styrol-Isopren-Styrol Blockcopolymer; Dexco) und Vector 8508 (Styrol-Butadien-Styrol Blockcopolymer), 50 Teile eines Pentaesters von teilhydriertem Kolophonium (Foralyn 110) und 1 Teil eines primären Antioxidantes (Irganox 1010; Ciba) (**Rezeptur 1 = PSA-1**) werden in einem Kneter mit Sigma-Schaufel bei einer Temperatur von +180°C zu einer homogenen Mischung verarbeitet. Alternativ werden 50 Teile eines 2:1-Gemisches von Vector 4113 (Styrol-Isopren-Styrol Blockcopolymer) und Vector 2518 (Styrol-Butadien-Styrol Blockcopolymer), 50 Teile Foralyn 110 und 1 Teil lrganox 1010 zu einer homogenen Mischung verarbeitet (**Rezeptur 2 = PSA-2**). Weiterhin werden alternativ 50 Teile Vector 4113 (Styrol-Isopren-Styrol Blockcopolymer), 50 Teile Foralyn 110 und 1 Teil Irganox 1010 zu einer homogenen Mischung verarbeitet (**Rezeptur 3 = PSA-3**). Nach dem Erkalten werden durch Verpressen der Klebmasse bei +200°C einschichtige Klebstoff-Folienstücke der gewünschten Dicke hergestellt.

### Beispiele

### Beispiel I

Aus Klebstoff-Folienstücken der Rezepturen 1 und 2 (PSA-1 bzw. PSA-2) werden rechteckige Klebestreifen unterschiedlicher Breite und Dicke hergestellt, welche an ihrem einen Ende zur Bildung eines nicht haftklebrigen Anfasserbereiches beidseitig mit 14 mm langen, die gesamte Breite der Klebestreifen überstreichenden, Polyesterfolien (Hostaphan RN 23) versehen sind. Bestimmt wird neben der Katapultierkraft die Katapultierneigung bei einhändigem Ablösen der Klebestreifen (Verklebungsuntergrund jeweils Resopal). Es ergeben sich nachfolgende Eigenschaften:

| **Versuchs-bezeichnung** | **Klebestreifen-dicke** | **Klebestreifen-abmessungen (L x B)** | **Ablösegeschwindigkeit** | **Katapultierkraft** | **Katapul-tierneigung*** |
|---|---|---|---|---|---|
| I.01-PSA-2 | 680 µm | 50mm x 5mm | 10 m/min | 1,2 N | 3 |
| I.02-PSA-2 | 680 µm | 50mm x 10mm | 10 m/min | 2,6 N | 3 |
| I.03-PSA-2 | 680 µm | 50mm x 15mm | 10 m/min | 3,8 N | 3 |
| I.04-PSA-2 | 680 µm | 50mm x 20mm | 10 m/min | 6,1 N | 3 |
| | | | | | |
| I.05-PSA-2 | 500 µm | 50mm x 10mm | 5m/min | 0,75 N | 3 |
| I.06-PSA-2 | 680 µm | 50mm x 10mm | 5m/min | 4,25 N | 3 |
| I.07-PSA-2 | 750 µm | 50mm x 10mm | 5m/min | 4,38 N | 3 |
| I.08-PSA-2 | 1000 µm | 50mm x 10mm | 5m/min | 7 N | 3 |
| | | | | | |
| I.09-PSA-2 | 500 µm | 50mm x 10mm | 10m/min | 0,72 N | 3 |
| I.10-PSA-2 | 680 µm | 50mm x 10mm | 10m/min | 2,3 N | 3 |
| I.11-PSA-2 | 750 µm | 50mm x 10mm | 10m/min | 2,8 N | 3 |
| I.12-PSA-2 | 1000 µm | 50mm x 10mm | 10m/min | 3,25 N | 3 |
| | | | | | |
| I.13-PSA-2 | 500 µm | 50mm x 10mm | 20m/min | 0,2 N | 2 |
| I.14-PSA-2 | 680 µm | 50mm x 10mm | 20m/min | 0,56 N | 3 |
| I.15-PSA-2 | 750 µm | 50mm x 10mm | 20m/min | 1,03 N | 3 |
| I.16-PSA-2 | 1000 µm | 50mm x 10mm | 20m/min | 1,25 N | 3 |
| | | | | | |
| I.17-PSA-1 | 700 µm | 50mm x 10mm | 10m/min | 4 N | 3 |
| I.18-PSA-1 | 1100 µm | 50mm x 10mm | 10m/min | > 7 N | 3 |
| * 3 Katapultiemeigung stark, 2 merklich, 1: gering, 0 sehr genng oder nicht nachweisbar | | | | | |

Erwartungsgemäß steigt die Katapultierkraft bei einer vorgegebenen Klebestreifendicke etwa proportional zur Breite der Klebestreifen an. Katapultierkräfte sinken mit steigender Ablösegeschwindigkeit. Jedoch wird in allen Fällen, auch im Falle hoher Ablösegeschwindigkeiten, eine starke oder merkliche Katapultierneigung sowie signifikante Katapultierkräfte beobachtet.

### Beispiel II

Aus Klebstoff-Folienstücken der Rezeptur 2 (PSA-2) werden entsprechend DE 44 28 587 ausgeformte Klebestreifen erstellt (II.05-PSA-2 mit nicht haftklebrigem Anfasserbereich, sonst ohne). Ermittelt wird die Katapultierkraft sowie die Katapultierneigung bei einhändigem Ablösen der Klebestreifen (Verklebungsuntergrund jeweils Resopal). Es ergeben sich nachfolgende Eigenschaften:

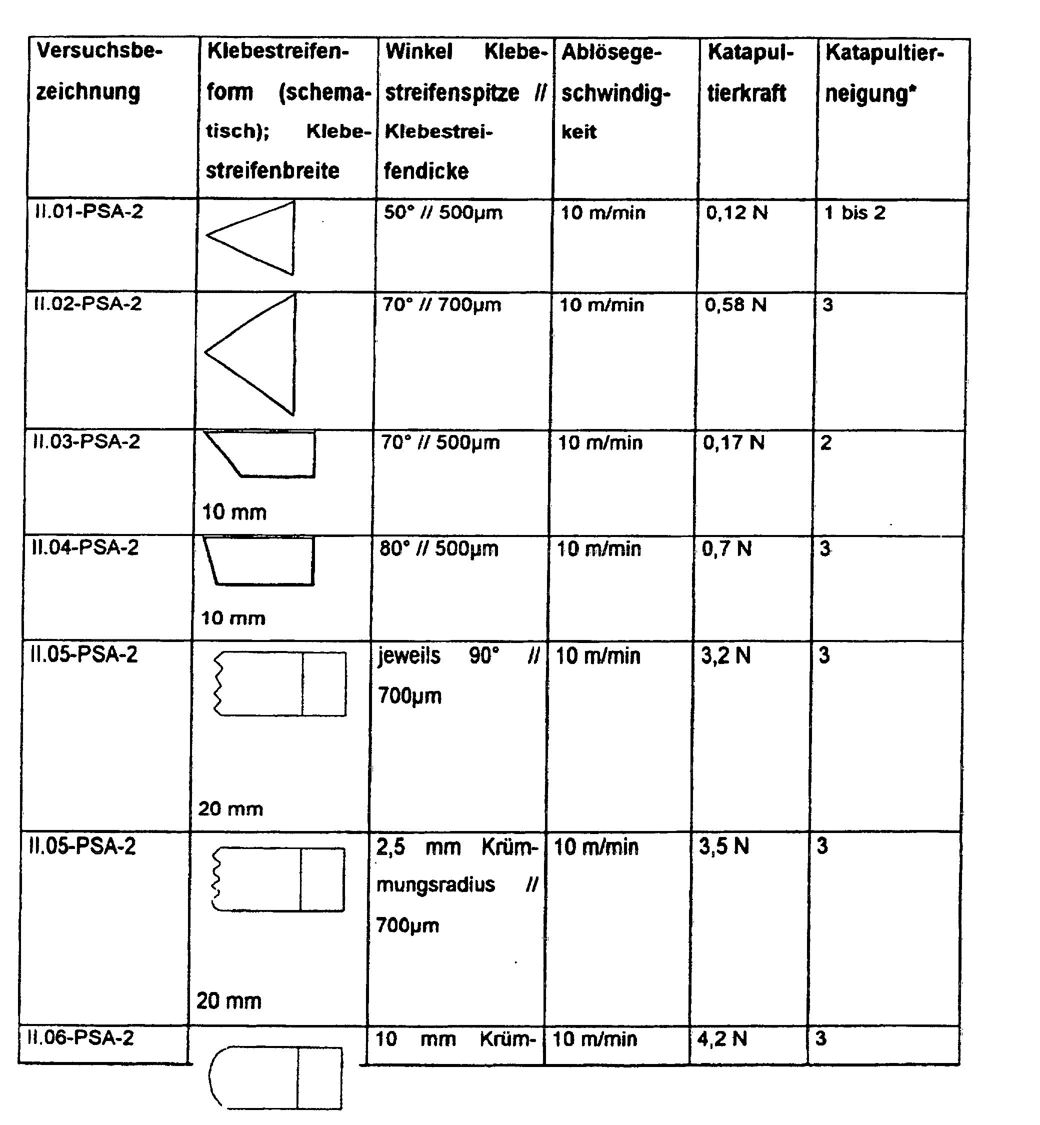

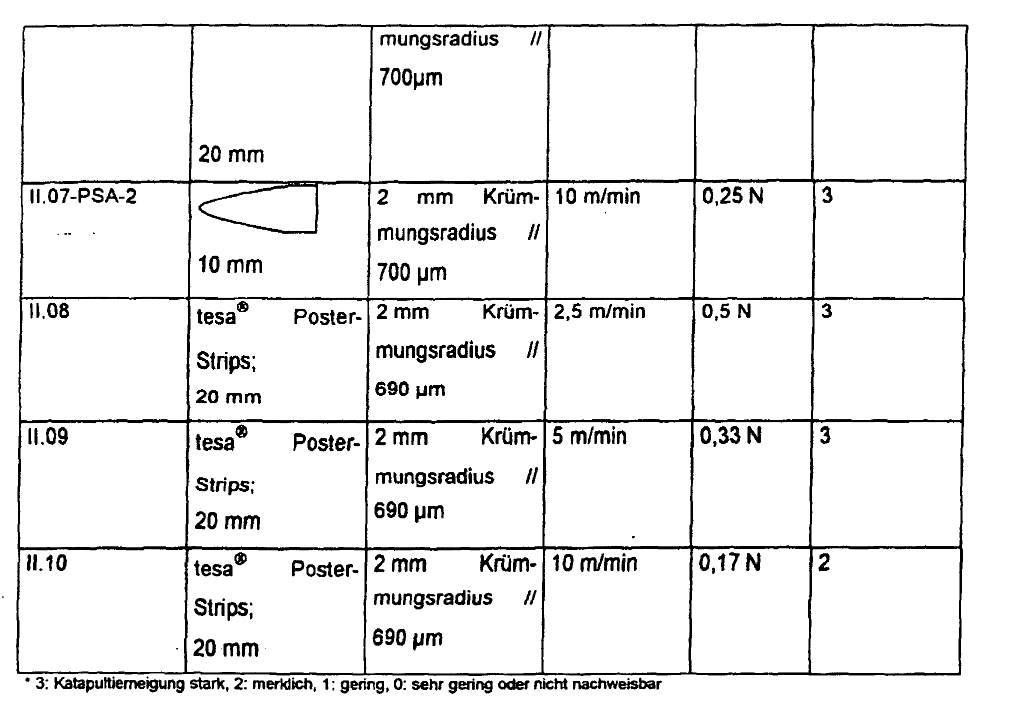

In allen Fällen werden eine starke oder eine merkliche Katapultierneigung sowie signifikante Katapultierkräfte beobachtet.

### Beispiel III

Hergestellt werden stripfähige Klebestreifen (Rezeptur 2 (PSA-2)), welche über einen ersten Haftklebebereich verfügen, der hohe Schälfestigkeit ermöglicht und hohe Ablösekräfte (Stripkräfte) verlangt, an den sich ein zweiter Haftklebebereich mit signifikant niedrigeren Stripkräften anschließt. Ermittelt werden Katapultierkraft und Katapultierneigung bei einhändigem Ablösen der Klebestreifen (Verklebungsuntergrund jeweils Resopal). Zum Vergleich werden ein rechteckiger Klebestreifen sowie ein spitz zulaufender Klebestreifen von dreieckiger Grundform getestet. Es ergeben sich nachfolgende Eigenschaften:

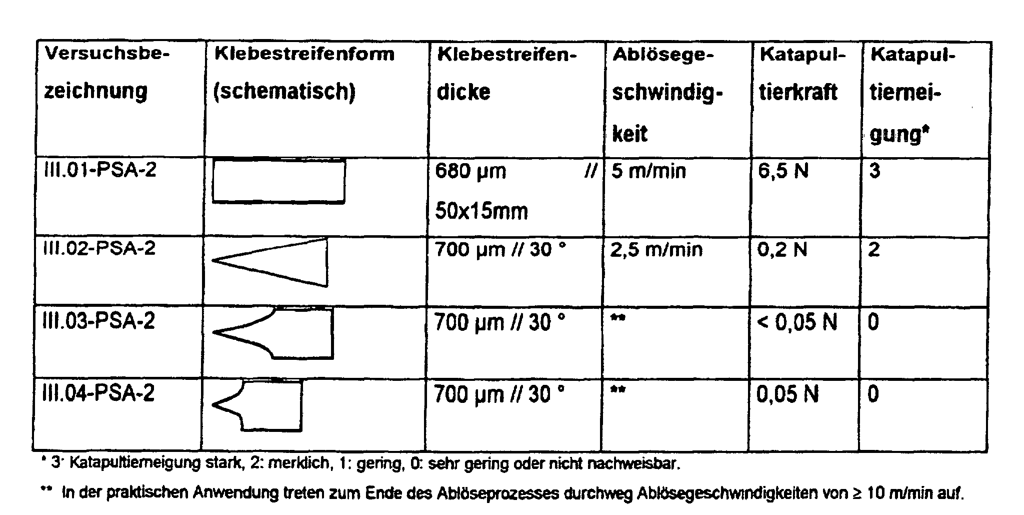

Klebestreifen der Versuche III.03 und III.04 werden in der Praxis zunächst infolge der hohen Anfangsstripkraft vergleichsweise vorsichtig und langsam aus der Klebfuge herausgelöst. Infolge der im Bereich der Klebestreifenverjüngung auftretenden stark abnehmenden Ablösekräfte (Stripkräfte) erfolgt jedoch im zweiten (sich verjüngenden) Klebestreifenbereich eine starke Beschleunigung der Ablösegeschwindigkeit (Stripgeschwindigkeit). Eine niedrige Stripgeschwindigkeit im Endbereich der Verklebung wird daher mit entsprechend ausgestalteten Klebestreifen in der Praxis nicht realisiert. Entsprechend weisen Klebestreifen III.03 und III.04 im Vergleich zu dem rechteckigen und dem dreieckigen Vergleichsmuster extrem niedrige Katapultierkräfte und eine sehr geringe oder nicht nachweisbare Katapultierneigung auf.

### Beispiel IV

Doppelseitig haftklebrige Klebestreifen (Rezeptur 2 (PSA-2)) der Abmessungen 50 mm x 15 mm von rechteckiger Form werden beidseitig in identischer Weise (deckungsgleich) in Teilen des Endbereiches der Klebestreifen vollflächig inertisiert. Die Inertisierung erfolgt derart, daß die haftklebrigen Bereiche sich zum Klebestreifenende hin stark verjüngen. Sich verjüngende Haftklebebereiche weisen zum Ende der Klebestreifen Winkel von ca. 10 ° auf. Die Prüfung erfolgt im Vergleich zu dem analogen keiner Inertisierung unterzogenen Klebestreifen. Es ergeben sich nachfolgende Eigenschaften:

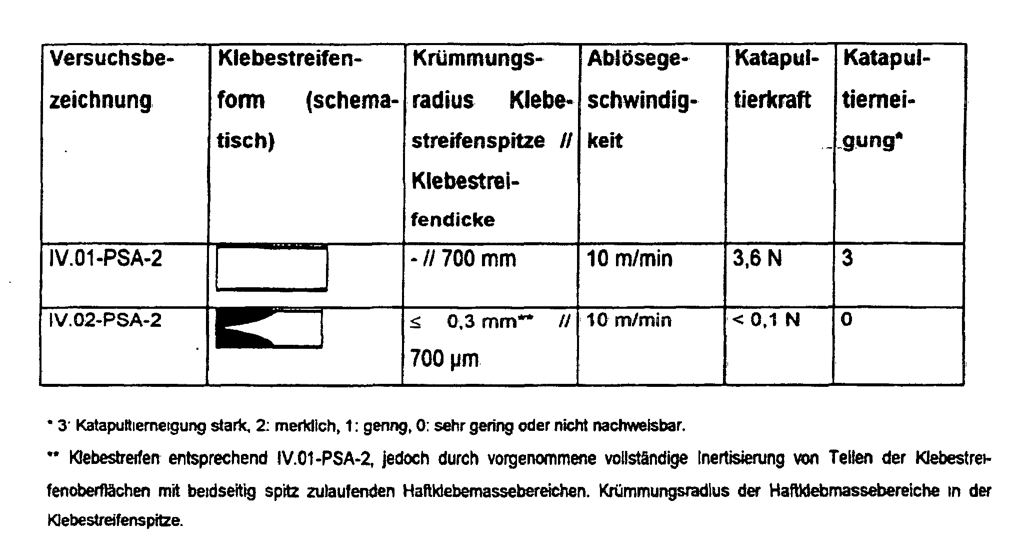

Durch eine beidseitige vollständige Inertisierung von Teilen der Klebestreifenoberfläche in der Art, daß die Haftklebebereiche zum Klebestreifenende spitz zulaufen, lassen sich stripfähige Klebestreifen realisieren, welche weitestgehend unabhängig von der geometrischen Klebestreifenform eine sehr niedrige Katapultierneigung aufweisen. Dies ermöglicht eine weitestgehende Abkopplung der Geometrie der Klebestreifenform von der Neigung der Klebestreifen zum Katapultieren.

### Beispiel V

Klebestreifen entsprechend Beispiel III, Versuch III.03-PSA-2, Versuch III.04-PSA-2 sowie weitere ausgewählte erfindungsgemäße Klebestreifenformen mit einschichtigem Produktaufbau werden bzgl. Katapultierkraft und Katapultierneigung im Vergleich zu mehrschichtigen Produktaufbauten (Länge der 20 mm breiten Klebestreifen, inklusive der nicht haftklebrigen Anfasserbereiche jeweils 50 mm) getestet. Krümmungsradien der Klebestreifenenden (Klebestreifenspitzen) wurden zu < 0,3 mm bestimmt. Es ergeben sich nachfolgende Eigenschaften:

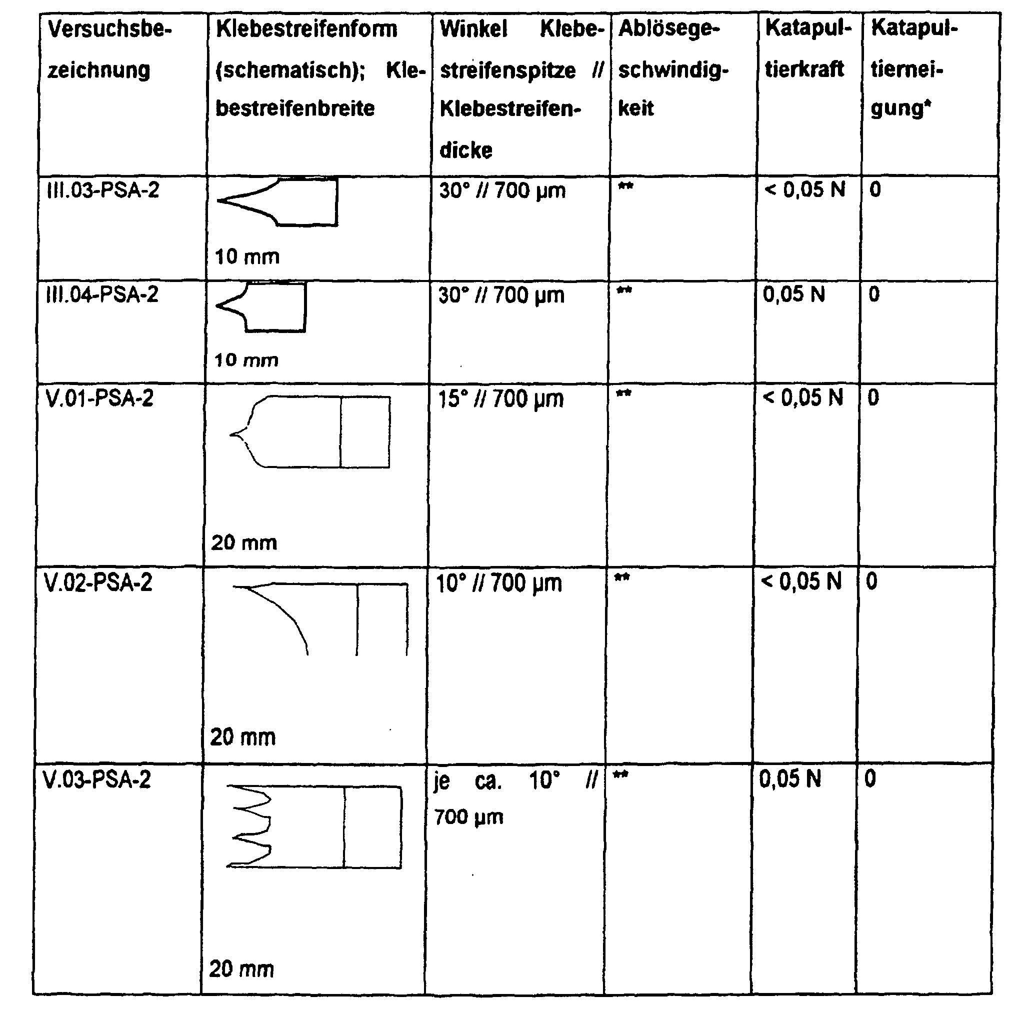

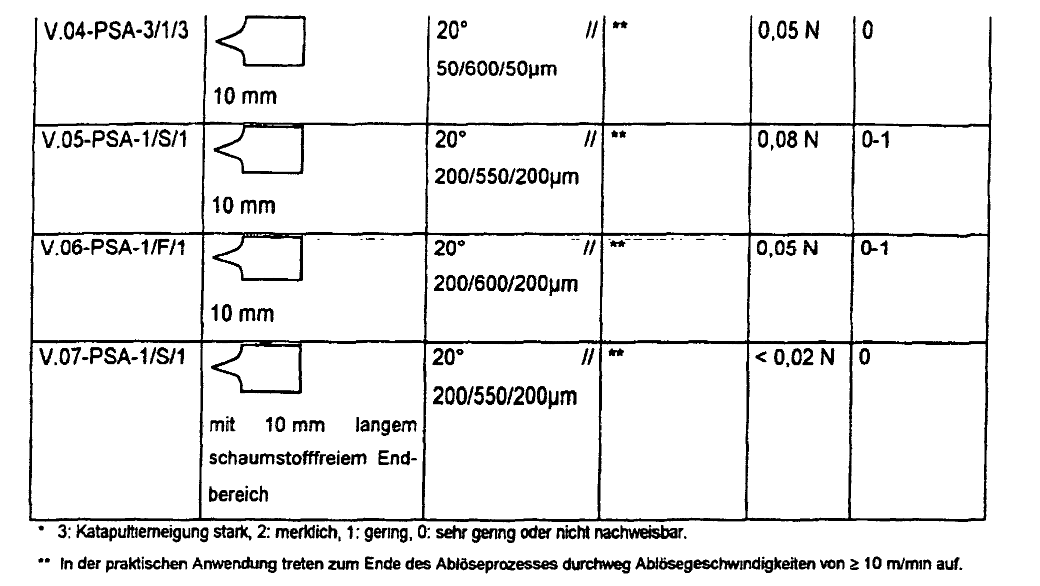

Sämtliche einschichtigen Klebestreifen weisen eine nicht nachweisbare Katapultierneigung auf. Muster V.04-PSA-3/1/3 besteht aus einem Dreischichtlaminat bestehend aus einer 600 µm starken Innenschicht der Rezeptur 1, welche beidseitig mit je ca. 50 µm starken Deckschichten der Rezeptur 3 versehen ist. Muster V.05-PSA-1/S/1 besteht aus einem 500 µm starken Polyolefinschaumstoff vom Raumgewicht 125 kg/m³ (Alveolit TEE 0800.55), welcher beidseitig mit je ca. 200 µm starken Haftklebemasse der Rezeptur 1 beschichtet ist. Muster V.06-PSA-1/F/1 besteht aus einem Dreischichtlaminat enthaltend eine geschäumte Haftklebeschicht mit einem mittleren Raumgewicht von 350 kg/m³ der Rezeptur 1, welche beidseitig mit ca. 225 µm dicken Klebmasseschichten derselben Rezeptur beschichtet ist. Muster V.07-PSA-1/S/1 entspricht in seinem Aufbau Muster V.05-PSA-1/S/1, enthält jedoch endständig einen 10 mm langen schaumstofffreien Endbereich. Sämtliche mehrschichtige Klebestreifen weisen eine nicht nachweisbare oder nicht nachweisbare bis geringe Katapultierneigung auf.

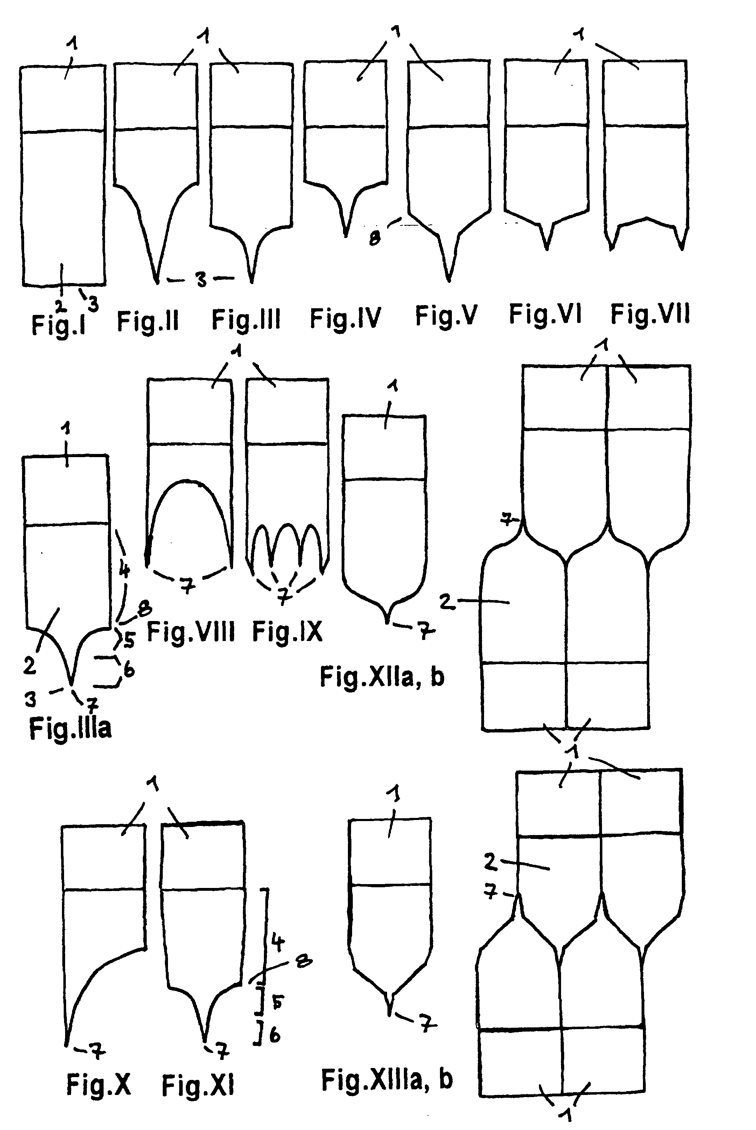

## Patentansprüche

1. Klebfolienstreifen, der sich von einer Verklebung durch dehnendes Verstrecken in Richtung der Verklebungsebene rückstands- und zerstörungsfrei wieder ablösen lässt,
a) mit einem ersten Ende und zumindest einem zweiten Ende (3),
b) wobei am ersten Ende ein Anfasser (1) ausgebildet ist, der insbesondere zum Ziehen an dem Klebestreifen geeignet ist, und wobei das zweite Ende (3) in Form einer Spitze (7) ausgebildet ist,
c) sowie mit einem ein- oder beidseitig selbstklebend ausgerüsteten Bereich (2), welcher sich vom Anfasser (1) zum zweiten Ende (3) des Klebfolienstreifens hin erstreckt, wobei der Bereich (2) folgende Teilbereiche (4, 5, 6) aufweist:
i) einen ersten selbstklebenden Teilbereich (4), welcher sich an den Anfasser (1) anschließt,
ii) einen zweiten selbstklebenden Teilbereich (5), der sich an den ersten Teilbereich (4) anschließt, wobei in dem zweiten Teilbereich (5) die Querschnittsfläche innerhalb einer Klebstreifenlänge von weniger als 50 %, bezogen auf die Klebstreifenbreite am Ende (8) des ersten Teilbereichs (4), um mehr als 60 % abnimmt,
iii) einen dritten selbstklebenden Teilbereich (6) anschließend an den zweiten Teilbereich (5), wobei das Ende des dritten Teilbereichs das zweite Ende (3) des Klebstreifenbereichs darstellt,
d) wobei die im dritten Teilbereich (6) gebildete Spitze (7) zwischen den Klebestreifenkanten einen Winkel von weniger als 35°, insbesondere von weniger als 20° aufweist.

2. Klebfolienstreifen nach Anspruch 1, **dadurch gekennzeichnet, dass**
im zweiten Teilbereich (5) die Querschnittsfläche innerhalb einer Klebstreifenlänge von weniger als 50 %, bezogen auf die Klebstreifenbreite am Ende (8) des ersten Teilbereichs (4), um mehr als 75 % abnimmt.

3. Klebfolienstreifen nach einem der Ansprüche 1 oder 2, **dadurch gekennzeichnet**, das die Abnahme der Querschnittsfläche im zweiten Teilbereich (5) um mehr als 60 % beziehungsweise um mehr als 75 % innerhalb einer Klebstreifenlänge von weniger als 35 %, bezogen auf die Klebstreifenbreite am Ende (8) des ersten Teilbereichs (4), erfolgt.

4. Klebestreifen nach zumindest einem der vorangehenden Ansprüche, **dadurch gekennzeichnet, dass**
die Breite des Klebfolienstreifens im zweiten Teilbereich (5) abnimmt.

5. Klebfolienstreifen nach einem der Ansprüche 1 oder 2, **dadurch gekennzeichnet, dass** die Dicke des Klebfolienstreifens im zweiten und dritten Teilbereich (5, 6) geringer als im ersten Teilbereich (4) ist, insbesondere um mehr als 20 % zum zweiten Ende (3) des Klebfolienstreifens abnimmt und insbesondere kontinuierlich zum zweiten Ende (3) des Klebfolienstreifens hin abnimmt.

6. Klebfolienstreifen nach zumindest einem der vorangehenden Ansprüche, **gekennzeichnet durch** eine Gesamtlänge von mehr als 20 mm, insbesondere von 25 bis 100 mm, wobei die Breite des ersten Teilbereichs (4) 8 bis 30 mm, insbesondere 10 bis 25 mm beträgt.

7. Klebfolienstreifen nach zumindest einem der vorangehenden Ansprüche, **dadurch gekennzeichnet, dass**
die Stripkraft im ersten Teilbereich (4) größer als 5 N, insbesondere größer als 10 N ist,
die Stripkraft im zweiten Teilbereich (5) gegenüber dem ersten Teilbereich (4) stark abnimmt
und die Katapultierkraft beim schlußendlichen Ablösen des dritten Teilbereichs (6) weniger als 0,1 N beträgt.

8. Klebfolienstreifen nach zumindest einem der vorangehenden Ansprüche, **gekennzeichnet durch** zumindest einen inertisierten Bereich (9), welcher sich zwischen dem ersten und dem zweiten Ende befindet und an den ein- oder beidseitig selbstklebend ausgerüsteten Bereich (2) angrenzt.

9. Verwendung eines Klebfolienstreifen nach zumindest einem der vorangehenden Ansprüche für eine rückstands- und zerstörungsfrei wiederlösbare Verklebung durch dehnendes Verstrecken in Richtung der Verklebungsebene, mit einer höheren Ablösegeschwindigkeit zum Ende des Ablöseprozesses als zu dessen Beginn bei konstanter Abzugsgeschwindigkeit.

10. Verwendung eines Klebfolienstreifens nach zumindest einem der Ansprüche 1 bis 8 zum katapultierfreien Wiederlösen einer damit hergestellten Verklebung durch dehnendes Verstrecken in Richtung der Verklebungsebene.

## Claims

1. Adhesive film strip redetachable without residue or destruction from a bond by stretching extension in the direction of the bond plane,
a) having a first end and at least one second end (3),
b) there being formed at the first end a grip tab (1) which is suitable in particular for pulling on the adhesive strip, and the second end (3) being designed in the form of a point (7),
c) and also having a single-sidedly or double-sidedly self-adhesive region (2), which extends from the grip tab (1) towards the second end (3) of the adhesive film strip, the region (2) having the following subregions (4, 5, 6) :
i) a first self-adhesive sub-region (4) which adjoins the grip tab (1),
ii) a second self-adhesive sub-region (5) which adjoins the first sub-region (4), the cross-sectional area in the second sub-region (5) decreasing by more than 60% within an adhesive-strip length of less than 50%, based on the adhesive-strip width at the end (8) of the first sub-region (4),
iii) a third self-adhesive sub-region (6) adjoining the second sub-region (5), the end of the third sub-region constituting the second end (3) of the adhesive-strip region,
d) the point (7) formed in the third sub-region (6) has an angle between the adhesive-strip edges of less than 35°, in particular less than 20°.

2. Adhesive film strip according to Claim 1, **characterized in that** in the second sub-region (5) the cross-sectional area decreases by more than 75% within an adhesive-strip length of less than 50%, based on the adhesive-strip width at the end (8) of the first sub-region (4).

3. Adhesive film strip according to one of Claims 1 or 2, **characterized in that** the decrease in the cross-sectional area in the second sub-region (5) by more than 60% or by more than 75% occurs within an adhesive-strip length of less than 35%, based on the adhesive-strip width at the end (8) of the first sub-region (4).

4. Adhesive strip according to at least one of the preceding claims, **characterized in that** the width of the adhesive-film strip decreases in the second sub-region (5).

5. Adhesive film strip according to either of Claims 1 and 2, **characterized in that** the thickness of the adhesive film strip in the second and third partial region (5, 6) is lower than in the first partial region (4), decreasing in particular by more than 20% at the second end (3) of the adhesive film strip and in particular decreasing continuously towards the second end (3) of the adhesive film strip.

6. Adhesive film strip according to at least one of the preceding claims, **characterized by** an overall length of more than 20 mm, in particular from 25 to 100 mm, the width of the first partial region (4) being 8 to 30 mm, in particular 10 to 25 mm.

7. Adhesive film strip according to at least one of the preceding claims, **characterized in that**
the stripping force in the first partial region (4) is greater than 5 N, in particular greater than 10 N,
the stripping force in the second partial region (5) decreases sharply relative to the first partial region (4)
and the catapulting force in the case of ultimate detachment of the third partial region (6) is less than 0.1 N.

8. Adhesive film strip according to at least one of the preceding claims, **characterized by** at least one neutralized region (9) which is located between the first and second ends and which borders the single-sidedly or double-sidedly self-adhesive region (2).

9. Use of an adhesive film strip according to at least one of the preceding claims for a bond which can be redetached without residue or destruction by stretching extension in the direction of the bond plane, having a higher detachment rate at the end of the detachment process than at its beginning, at a constant removal rate.

10. Use of an adhesive film strip according to at least one of Claims 1 to 8 for catapulting-free release of a bond produced therewith by stretching extension in the direction of the bond plane.

## Revendications

1. Ruban de feuille adhésive, qui se laisse à nouveau détacher, sans laisser de résidus et sans causer de destruction, d'un collage par un étirage d'extension dans la direction du plan de collage,
a) ayant une première extrémité et au moins une deuxième extrémité (3),
b) une languette de prise (1) étant formée à la première extrémité, laquelle languette est, en particulier, appropriée à la traction sur le ruban adhésif, et la deuxième extrémité (3) étant formée sous la forme d'une pointe (7),
c) ayant également un domaine (2), apprêté de manière autoadhésive sur une ou sur deux faces, qui se prolonge de la languette de prise (1) à la deuxième extrémité (3) du ruban de feuille adhésive, le domaine (2) présentant les domaines partiels (4, 5, 6) suivants :
i) un premier domaine partiel autoadhésif (4), qui se raccorde à la languette de prise (1),
ii) un deuxième domaine partiel auto-adhésif (5), qui se raccorde au premier domaine partiel (4), dans le deuxième domaine partiel (5), l'aire de la section au sein d'une longueur de ruban adhésif de moins de 50%, par rapport à la largeur du ruban adhésif à l'extrémité (8) du premier domaine partiel (4), diminue de plus de 60%,
iii) un troisième domaine partiel autoadhésif (6), qui se raccorde au deuxième domaine partiel (5), l'extrémité du troisième domaine partiel constituant la deuxième extrémité (3) du domaine de ruban adhésif,
d) la pointe (7) formée dans le troisième domaine partiel (6) entre les rebords du ruban adhésif, présentant un angle de moins de 35°, en particulier, de moins de 20°.

2. Ruban de feuille adhésive selon la revendication 1, **caractérisé en ce que**, dans le deuxième domaine partiel (5), l'aire de la section au sein d'une longueur de ruban adhésif de moins de 50%, par rapport à la largeur du ruban adhésif à l'extrémité (8) du premier domaine partiel (4), diminue de plus de 75%.

3. Ruban de feuille adhésive selon la revendication 1 ou 2, **caractérisé en ce que** la diminution de l'aire de la section dans le deuxième domaine partiel (5) a lieu à plus de 60% ou à plus de 75% au sein d'une longueur de ruban adhésif de moins de 35%, par rapport à la largeur de ruban adhésif à l'extrémité (8) du premier domaine partiel (4).

4. Ruban de feuille adhésive selon au moins l'une quelconque des revendications précédentes, **caractérisé en ce que** la largeur du ruban de feuille adhésive diminue dans le deuxième domaine partiel (5).

5. Ruban de feuille adhésive selon la revendication 1 ou 2, **caractérisé en ce que** l'épaisseur du ruban de feuille adhésive dans le deuxième et le troisième domaines partiels (5, 6) est inférieure à ce qu'elle est dans le premier domaine partiel (4), **en ce qu'**en particulier, elle diminue de plus de 20% jusqu'à la deuxième extrémité (3) du ruban de feuille adhésive et **en ce qu'**elle diminue, en particulier, de manière continue, jusqu'à la deuxième extrémité (3) du ruban de feuille adhésive.

6. Ruban de feuille adhésive selon au moins l'une quelconque des revendications précédentes, **caractérisé par** une longueur globale de plus de 20 mm, en particulier, de 25 à 100 mm, la largeur du premier domaine partiel (4) étant de 8 à 30 mm, en particulier, de 10 à 25 mm.

7. Ruban de feuille adhésive selon au moins l'une quelconque des revendications précédentes, **caractérisé en ce que** la force de décollement dans le premier domaine partiel (4) est supérieure à 5 N, en particulier, supérieure à 10 N, **en ce que** la force de décollement dans le deuxième domaine partiel (5) diminue fortement par rapport au premier domaine partiel (4), et **en ce que** la force de catapultage lors du détachement final du troisième domaine partiel (6) est de moins de 0,1 N.

8. Ruban de feuille adhésive selon au moins l'une quelconque des revendications précédentes, **caractérisé par** au moins un domaine rendu inerte (9), qui se trouve entre la première et la deuxième extrémités et qui se raccorde au domaine (2), apprêté de manière autoadhésive sur une ou sur deux faces.

9. Utilisation d'un ruban de feuille adhésive selon au moins l'une quelconque des revendications précédentes en vue d'un collage détachable à nouveau, sans laisser de résidus et sans causer de destruction, par étirage d'extension dans la direction du plan de collage, avec une vitesse de détachement plus élevée vers la fin du processus de détachement qu'à son début en cas de vitesse de retrait constante.

10. Utilisation d'un ruban de feuille adhésive selon au moins l'une quelconque des revendications 1 à 8 en vue du détachement sans catapultage d'un collage réalisé avec celui-ci par étirage d'extension dans la direction du plan de collage.
